# EUROPÄISCHE PATENTSCHRIFT

(11) **EP 3 325 782 B1**
(45) Veröffentlichungstag und Bekanntmachung des Hinweises auf die Patenterteilung: **24.04.2019**
(21) Anmeldenummer: 16725868.0
(22) Anmeldetag: 31.05.2016
(51) Int. Cl.: F01N 3/20

(54) **EINSPRITZVENTIL EINES ABGASNACHBEHANDLUNGSSYSTEMS**
INJECTION VALVE, EXHAUST-GAS AFTERTREATMENT SYSTEM
SOUPAPE D'INJECTION ET SYSTÈME DE POST-TRAITEMENT DES GAZ D'ÉCHAPPEMENT

(30) Priorität: 22.07.2015 DE 102015213814
(43) Veröffentlichungstag der Anmeldung: 30.05.2018
(73) Patentinhaber: Robert Bosch GmbH, 70442 Stuttgart (DE)
(72) Erfinder: HAEBERER, Rainer, 75015 Bretten (DE)
(86) Internationale Anmeldenummer: PCT/EP2016/062213
(87) Internationale Veröffentlichungsnummer: WO 2017/012759

(56) Entgegenhaltungen:
- WO-A1-2006/122561
- WO-A1-2012/171757
- DE-A1-102010 039 079
- US-A1- 2010 314 470

## Beschreibung

Die Erfindung betrifft ein Einspritzventil, insbesondere für ein Abgasnachbehandlungssystem eines Kraftfahrzeugs, mit einem axial verlagerbaren Ventilelement, mit einer Ventilöffnung, der ein Ventilsitz für das Ventilelement zugeordnet ist, mit einem mit dem Ventilelement fest verbundenen Kolben, der durch die Ventilöffnung hindurchgeführt ist, und mit einem Federelement, das den Kolben mit dem Ventilelement gegen den Ventilsitz drängt, wobei das Ventilelement in einer Spritzkammer verlagerbar ist, die dem Ventilelement gegenüberliegend mehrere Spritzöffnungen aufweist.

Weiterhin betrifft die Erfindung ein Abgasnachbehandlungssystem mit einem derartigen Einspritzventil.

### Stand der Technik

Bei Kraftfahrzeugen mit Verbrennungsmotor muss aufgrund der strenger werdenden Abgasgesetzgebung unter anderem der Schadstoff NOx reduziert werden, um die gesetzlichen Vorgaben einhalten zu können. Ein bekanntes Verfahren zur Reduktion der NOx-Schadstoffe ist das sogenannte SCR-Verfahren (SCR=selektive katalytische Reduktion), bei welchem der Schadstoff NOx unter Zuhilfenahme eines flüssigen Reduktionsmittels, insbesondere einer wässrigen Harnstofflösung, zu Stickstoff und Wasserstoff reduziert wird. Üblicherweise wird das Reduktionsmittel mittels einer Förderpumpe von einem Tank zu einem Einspritzventil, das beispielsweise als Pumpe-Düse-Einheit ausgebildet ist, gefördert. Dort wird es verdichtet und über das Einspritzventil dem Abgas als feines Spray zugeführt. Durch das Ausbilden des Einspritzventils als Pumpe-Düse-Einheit entsteht der Vorteil, dass die Kompression des Reduktionsmittels erst unmittelbar am Abgasrohr vorgenommen wird. Dadurch kann ein sehr hoher Druck erzeugt werden, der in Verbindung mit einer geeigneten Ausspritzgeometrie zu einem sehr feinen Spray führt. Umso feiner das Spray ist, desto besser kann das Reduktionsmittel mit dem Abgas zusammen in einem SCR-Katalysator reagieren.

Einspritzventile der eingangs genannten Art sind beispielsweise aus der Offenlegungsschrift EP 1 878 920 A1 bekannt. Das Einspritzventil ist dabei als nach außen öffnendes Ventil ausgebildet, bei welchem ein das Ventilelement betätigender Kolben durch die Ventilöffnung hindurchgeführt ist und auf der dem Ventilelement gegenüberliegenden Seite der Ventilöffnung durch das Federelement vorgespannt ist, um das Ventilelement in den Ventilsitz zu ziehen. Nachteilig bei der bekannten Lösung ist, dass in Folge des sich nach außen öffnenden Ventilelements nur ein Hohlspray erzeugt werden kann, und dass bei Auftreten niedriger Temperaturen, die zu einem Gefrieren des Reduktionsmittels führen, eine einwandfreie Funktionsfähigkeit des Einspritzventils nicht mehr gewährleistet werden kann. Auch die WO 2012/171757 A1 und die DE 102010039079 A1 sind Stand der Technik.

### Offenbarung der Erfindung

Das erfindungsgemäße Einspritzventil mit den Merkmalen des Anspruchs 1 hat den Vorteil, dass die Eisdruckbeständigkeit des Einspritzventils gegenüber bekannten Lösungen erhöht ist, und dass durch eine einfache Maßnahme ein Hohlspray vermieden und damit die Verteilung des Reduktionsmittels im Abgas verbessert werden kann. Das erfindungsgemäße Einspritzventil zeichnet sich dazu dadurch aus, dass wenigstens zwei erste der Spritzöffnungen Mittelachsen aufweisen, die sich außerhalb des Einspritzventils kreuzen und das eine zentralliegende zweite Spritzöffnung einen im Vergleich zu den übrigen Spritzöffnungen größeren Durchmesser aufweist. Die zwei ersten Spritzöffnungen weisen also Mittelachsen auf, die sich außerhalb des Einspritzventils kreuzen. Die Mittelachsen definieren eine Ausrichtung der jeweiligen Spritzöffnung. Insbesondere sind die Spritzöffnungen als Bohrungen, insbesondere in einer Spritzlochplatte zu verstehen, die eine Mittelachse gemäß der Bohrachse aufweisen. Zumindest zwei der ersten Spritzlochöffnungen sind somit so ausgebildet beziehungsweise ausgerichtet, dass sich ihre Sprays außerhalb der Spritzlochplatte beziehungsweise des Einspritzventils treffen. Dadurch wird ein sogenannter Kollisionsstrahl erzeugt, durch welchen aufgrund der aufeinandertreffenden Sprays das Reduktionsmittel weiter zerstäubt wird und sich dadurch besser in dem Abgas des Verbrennungsmotors verteilt. Zusätzlich oder alternativ ist die zentral insbesondere in der Spritzlochplatte liegende zweite Spritzöffnung ausgebildet, die einen im Vergleich zu den übrigen Spritzöffnungen größeren Durchmesser aufweist. Durch die verhältnismäßig große Spritzöffnung wird erreicht, dass bei geschlossenem Ventil in Folge von Stauwärme in der Spritzkammer befindliches Reduktionsmittel verdampft oder durch die Spritzöffnung entweicht. Dadurch wird erreicht, dass bei einem Abschalten des Systems in Umgebungstemperaturen unterhalb des Gefrierpunkts des Reduktionsmittels, kein Reduktionsmittel in der Spritzkammer verbleibt, das zu einer Leckage des Einspritzventils oder insbesondere zu einer Beschädigung der Spritzlochplatte aufgrund gefrierenden Reduktionsmittels führen könnte. Somit wird durch diese erfindungsgemäße Ausführungsform erreicht, dass das Einspritzventil eisdruckfest ausgebildet ist.

Zweckmäßigerweise ist vorgesehen, dass die Spritzkammer einen Innendurchmesser aufweist, der größer ist als der maximale Außendurchmesser des Ventilelements. Dadurch wird ein Strömungsweg für das Reduktionsmittel im Betrieb und ein Raum in der Spritzkammer zur Verfügung gestellt, in welchem nach Abschaltung des Systems gegebenenfalls trotzdem verbliebenes Reduktionsmittel gefrieren kann, ohne das Einspritzventil zu beschädigen.

Weiterhin ist bevorzugt vorgesehen, dass die ersten Spritzöffnungen zumindest im Wesentlichen radial außerhalb des Ventilelements liegen. Dadurch wird ein vorteilhafter Medienfluss von der Ventilöffnung zu den Spritzöffnungen beim Verlagern des Ventilelements von dem Ventilsitz weg zum Freigeben der Ventilöffnung erreicht.

Gemäß einer bevorzugten Weiterbildung der Erfindung ist vorgesehen, dass das Ventilelement kegelstumpfförmig ausgebildet ist und eine flache, den Spritzlöchern der Spitzlochplatte gegenüberliegende Rückseite aufweist. Vorzugsweise dient die Rückseite als Axialanschlag für das Ventilelement, das dadurch bis an die Spitzlochplatte herangeführt werden kann. Durch die zuvor beschriebene Dimensionierung der Spritzkammer wird gewährleistet, dass auch bei vollständig geöffnetem Ventil, wenn also die Rückseite des Ventilelements an der Spritzlochplatte anliegt, das Reduktionsmittel durch die radial außerhalb des Ventilelements liegenden Spritzöffnungen entweichen kann. Ist in der Spritzlochplatte die mittige zweite Spritzöffnung ausgebildet, so wird sie dabei durch das Ventilelement vorzugsweise verschlossen, sodass das Reduktionsmittel nicht durch die verhältnismäßig große Spritzöffnung entweicht, sondern gezielt durch die ersten Spritzöffnungen geführt wird.

Bevorzugt weist das Ventilelement an seiner Rückseite einen Axialvorsprung auf. Durch diesen Axialvorsprung kann die maximale Verlagerung des Ventilelements in der Spritzkammer definiert werden. Insofern dient der Axialvorsprung im Wesentlichen als Axialanschlag für das Ventilelement. Durch den Axialvorsprung kann insbesondere erreicht werden, dass auch Spritzöffnungen, die radial innerhalb des Ventilelements liegen, und ansonsten von der Rückseite des Ventilelements verschlossen werden würden, mit Reduktionsmittel bei maximal geöffnetem Ventilelement beaufschlagt werden können. Der Axialvorsprung ist insofern bevorzugt in einem Bereich angeordnet, in welchem sich keine der ersten Spritzöffnungen befindet.

Weiterhin ist bevorzugt vorgesehen, dass der Axialvorsprung mittig angeordnet und breiter als die zweite Spritzlochöffnung ausgebildet ist, um die zweite Spritzöffnung bei maximaler Verlagerung des Ventilelements zu verschließen. Der Axialvorsprung dichtet somit die mittige zweite Spritzöffnung vollständig ab, wenn das Ventilelement entsprechend weit in seine maximale Öffnungsstellung verlagert wurde. Dadurch ist insbesondere eine vorteilhafte Kombination aus breiter zweiter Spritzöffnung und ersten Spritzöffnungen, die sich dann auch im Bereich des Ventilelements befinden können, erreicht werden. Es wird dadurch insbesondere der Vorteil erreicht, dass Reduktionsmittel durch die ersten Spritzöffnungen sicher geführt und die zweite Spritzöffnung sicher verschlossen ist.

Besonders bevorzugt ist vorgesehen, dass die zweite Spritzöffnung einen Durchmesser von mindestens 0,5 mm aufweist. Dadurch wird gewährleistet, dass das Reduktionsmittel selbstständig aus der Spritzkammer abfließen kann, ohne dass die zweite Spritzöffnung beispielsweise von Kristallen, die beim Gefrieren des Reduktionsmittels entstehen, verschlossen wird.

Das erfindungsgemäße Abgasnachbehandlungssystem zeichnet sich durch das erfindungsgemäße Einspritzventil aus. Es ergeben sich hierdurch die bereits genannten Vorteile. Weitere Merkmale und Vorteile ergeben sich aus dem zuvor Beschriebenen sowie aus den Ansprüchen.

Im Folgenden soll die Erfindung anhand der Zeichnung näher erläutert werden. Dazu zeigen
- Figur 1: ein Abgasnachbehandlungssystem eines Kraftfahrzeugs in einer vereinfachten Darstellung und
- Figur 2: ein Einspritzventil des Abgasnachbehandlungssystems in einer vergrößerten Schnittdarstellung.

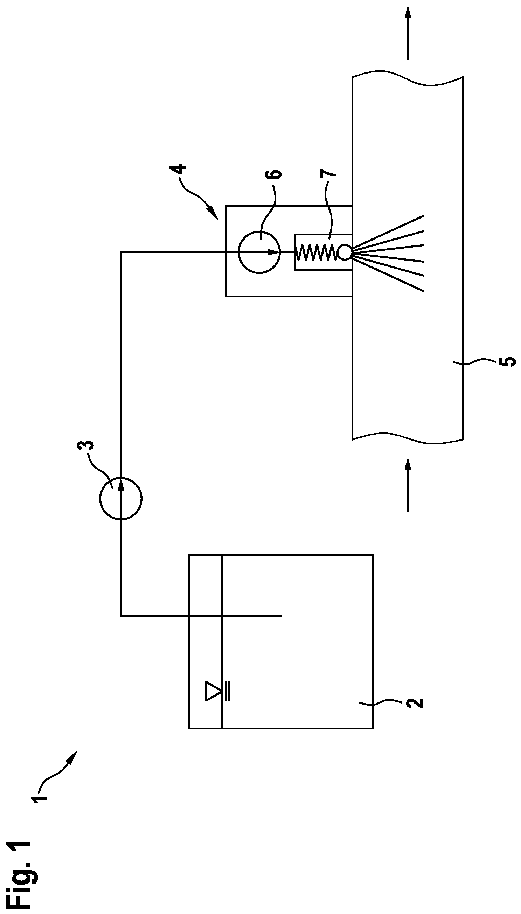

Figur 1 zeig in einer vereinfachten Darstellung ein Abgasnachbehandlungssystem 1 für ein hier nicht näher dargestelltes Kraftfahrzeug. Das Abgasnachbehandlungssystem 1 weist einen Tank 2 auf, der zur Aufbewahrung und Bereitstellung eines flüssigen Reduktionsmittels beziehungsweise Abgasnachbehandlungsmittels, insbesondere einer wässrigen Harnstofflösung, dient. Mittels einer Förderpumpe 3 kann das flüssige Reduktionsmittel dem Tank 2 entnommen und zu einem Einspritzventil 4 gefördert werden. Das Einspritzventil 4 ist einem Abgasrohr 5 eines hier nicht näher dargestellten Verbrennungsmotors des Kraftfahrzeugs zugeordnet, um das Reduktionsmittel in das Abgas des Verbrennungsmotors einzuspritzen. Das Einspritzventil 4 ist dabei als Pumpe-Düse-Einheit ausgebildet, die eine integrierte Fördereinrichtung 6, insbesondere Pumpe, sowie ein druckgesteuertes Ventil 7, hier nur vereinfacht gezeigt, umfasst.

Aufgrund einer gegebenenfalls langen Ansaugleitung und der im Abgasrohr herrschenden hohen Temperaturen ist es vorteilhaft, dass zusätzlich zu der Pumpe die Förderpumpe 3 vorgesehen und insbesondere an dem Tank 2 angeordnet ist, um die Flüssigkeit bereits vor der Pumpe-Düse-Einheit unter einen Druck von 2 bis 3 bar zu setzen und so der Pumpe-Düse-Einheit zuzuführen. Durch die weitere Pumpe des Einspritzventils 4 wird der Vorteil erreicht, dass die anschließende Kompression des Reduktionsmittels erst unmittelbar vor der Einspritzstelle erreicht/vorgenommen wird. Dadurch kann ein sehr hoher Einspritzdruck erzeugt werden, der zu einem vorteilhaft feinen Spray führt. Alternativ kann auch auf eine der beiden Pumpen verzichtet werden.

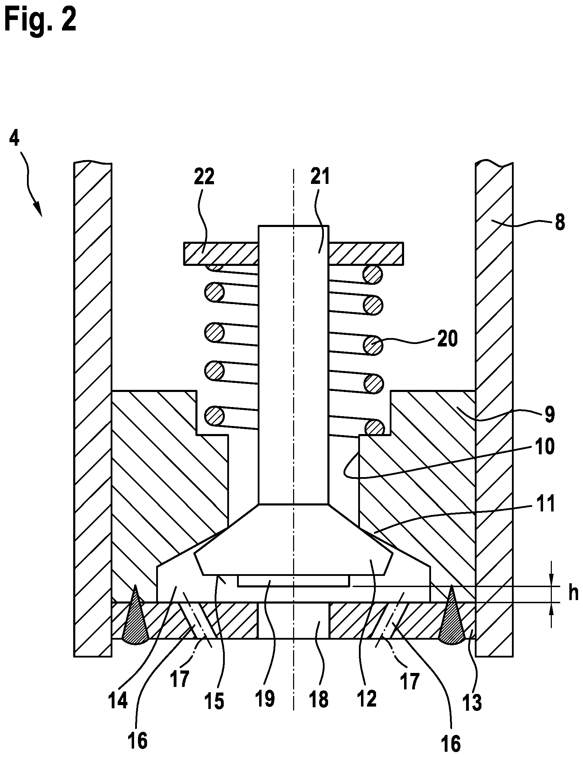

Figur 2 zeigt in einer vereinfachten Schnittdarstellung einen vergrößerten Ausschnitt des Einspritzventils 4 des Abgasnachbehandlungssystems 1 aus Figur 1. Bereits bekannte Elemente sind mit den gleichen Bezugszeichen versehen, sodass insofern auf die oben stehende Beschreibung verwiesen wird.

Das Einspritzventil 4 weist ein Gehäuse 8 auf, das hülsenförmig ausgebildet ist. In das Gehäuse eingesetzt ist ein Ventilträger 9, der eine axiale Ventilöffnung 10 aufweist, der ein Ventilsitz 11 zugeordnet ist. Der Ventilsitz 11 ist dabei trichterförmig auf die Ventilöffnung 10 zulaufend ausgebildet. Der Ventilsitz 11 ist dabei auf der Einspritzseite des Einspritzventils 4 angeordnet.

Das Einspritzventil 4 weist weiterhin ein Ventilelement 12 auf, das kegelstupfförmig in der Art eines Ventiltellers ausgebildet ist, und einen Außendurchmesser aufweist, der größer ist als der Innendurchmesser der Ventilöffnung 10, um die Ventilöffnung 10 beim Anliegen am Ventilsitz 11 dicht zu verschließen. Das Trägerelement 9 bildet zusammen mit einer Spritzlochplatte 13 eine Spritzkammer 14, in welcher das Ventilelement 12 verlagerbar ist. Die Spritzkammer 14 wird insofern durch die Spritzlochplatte 13, das Trägerelement 11 und das geschlossene Ventilelement 12 begrenzt. Die Spritzlochplatte 13 erstreckt sich senkrecht zur Bewegungsrichtung des Ventilelements 12 und ist mit dem Trägerelement 9 insbesondere verschweißt. Damit das Ventilelement 12 axial verlagerbar ist, ist die Spritzlochplatte 13 beabstandet zur Rückseite 15 des Ventilelements 12 angeordnet. Die Spritzkammer 14 weist außerdem einen Innendurchmesser auf, der größer ist als der maximale Außendurchmesser des Ventilelements 12, sodass sich in jedem Fall, also unabhängig von der Stellung des Ventilelements 12, Freiräume in der Spritzkammer 14 ergeben.

Die Spritzlochplatte 13 weist mehrere erste Spritzlochöffnungen 16 auf, die auf einem Durchmesser der Spritzlochplatte 13 gleichmäßig beabstandet zueinander angeordnet sind, wobei die Spritzlochöffnungen 16 im Wesentlichen radial außerhalb des Ventilelements 12 liegen beziehungsweise auf einem Durchmesser, der größer ist als der maximale Außendurchmesser des Ventilelements 12. Die ersten Spritzlochöffnungen 16 weisen jeweils eine Mittelachse 17 auf, die geneigt ausgerichtet ist. Die Mittelachsen 17 sind dabei derart geneigt ausgerichtet, dass sie sich außerhalb des Einspritzventils 4 kreuzen, wie durch gestrichelte Linien in Figur 2 angedeutet. Weiterhin weist die Spritzlochplatte 13 eine mittige beziehungsweise zentrale zweite Spritzöffnung 18 auf, die einen im Vergleich zu den Spritzöffnungen 16 größeren Durchmesser aufweist. Insbesondere weist die Spritzöffnung 18 einen Durchmesser von mindestens 0,5 mm auf.

Das Ventilelement 12 weist an seiner Rückseite 15 außerdem einen Axialvorsprung 19 auf, der ebenfalls mittig angeordnet ist und einen Außendurchmesser aufweist, der größer ist als der der Spritzöffnung 18. Der Abstand h des Axialvorsprungs 19 von der Spritzlochplatte 13 im geschlossenen Zustand des Ventils definiert dabei den Verstellweg beziehungsweise den Hub des Ventilelements 12.

Im Normalzustand wird das Ventilelement 12 durch ein Federelement 20 in den Ventilsitz 11 gezogen, sodass die Ventilöffnung 10 verschließt. Dazu ist ein Kolben 21 fest mit dem Ventilelement 12 verbunden und durch die Ventilöffnung 10 hindurchgeführt. Auf der von dem Ventilelement 12 abgewandten Rückseite des Trägerelements 9 ist zwischen dem Trägerelement 9 und einem fest mit dem Kolben 21 verbundenen Anschlag 22 das Federelement 20 vorgespannt gehalten. Vorliegend ist das Federelement 20 als Schraubenfeder ausgebildet, die koaxial zu dem Kolben 21 angeordnet ist.

Wird nun im Betrieb der Druck durch die Fördereinrichtung 3 und/oder die Pumpe 6 ausreichend weit erhöht, wird das Ventilelement 12 entgegen der Kraft des Federelements 20 von dem Ventilsitz 11 gelöst, sodass die Ventilöffnung 10 zumindest bereichsweise freigegeben wird. Das Reduktionsmittel strömt dann an dem Ventilelement 12 vorbei in die Spritzkammer 14 und von dort zu den Spritzöffnungen 16 und in das Abgasrohr 5. Aufgrund der vorteilhaften Neigung der Mittelachsen 17 treffen sich dabei die Sprays aus den Spritzöffnungen 16, was zu einer weiteren Zerstäubung des Reduktionsmittels und dabei einer besseren Vermengung des Reduktionsmittels mit dem Abgas führt. Es werden sogenannte Kollisionssprays/-Strahlen erzeugt.

Das Ventilelement 12 wird mit dem Axialvorsprung 19 bis an die Spritzlochplatte 13 bewegt. Dabei dichtet beziehungsweise verschließt der Axialvorsprung 19 in dieser Stellung die Spritzöffnung 18, sodass kein Reduktionsmittel unerwünscht durch die Öffnung 18 entweichen kann.

Nach außen öffnende Ventilelemente mit einer Spritzlochplatte haben normalerweise das Problem, dass sich beim Gefrieren der wässrigen Harnstofflösung beziehungsweise des Reduktionsmittels in Folge der Volumenausdehnung beim Phasensprung die Spritzlochplatte verformen und sich somit der Ankerhub beziehungsweise der Hub des Ventilelements die Spritzlochgeometrie verändern kann. Dadurch können sich Einspritzmenge und Form des abgegebenen Sprays verändern. Beim Gefrieren dehnt sich das Reduktionsmittel aus und kann dazu führen, dass das Ventilelement von dem Ventilsitz weggedrängt wird. Dies hat zur Folge, dass das Einspritzventil leckt.

Durch die vorteilhafte Ausführung des Einspritzventils 4 wird erreicht, dass im geschlossenen Zustand, wenn also das Ventilelement 12 an dem Ventilsitz 11 anliegt, die verhältnismäßig große Spritzöffnung 18 frei ist, sodass in Folge von Stauwärme in der Spritzkammer 14 befindliches Reduktionsmittel verdampft oder über die Spritzöffnung 18 abfließt. Die kleineren Spritzöffnungen 16 können aufgrund von Schmutz/Ruß und Kristallbildung schnell verschließen, wobei die größere Spritzöffnung 18 weiterhin ein Abfließen von Reduktionsmittel ermöglicht. Es wird somit verhindert, dass dann, wenn das Einspritzventil 4 leckt, sich Reduktionsmittel in der Spritzkammer 14 sammeln und gefrieren kann, was zu einer Beschädigung der Spritzlochplatte 13 führen könnte.

Darüber hinaus hat die Spritzöffnung 18 den Vorteil, dass beim Schließvorgang des Ventilelements 12 in der Spritzkammer 14 kein Unterdruck entsteht, sodass das Einspritzventil 4 sehr schnell und dicht schließen kann. Außerdem kann über die große Spritzöffnung 18 auf einfache Art und Weise der Hub des Ventilelements 12 gemessen beziehungsweise überprüft werden.

## Patentansprüche

1. Einspritzventil (4), insbesondere eines Abgasnachbehandlungssystems (1) mit einem axial verlagerbaren Ventilelement (12), mit einer Ventilöffnung (10), der ein Ventilsitz (11) für das Ventilelement (12) zugeordnet ist, mit einem mit dem Ventilelement (12) fest verbundenen Kolben (21), der durch die Ventilöffnung (10) hindurchgeführt ist, und mit einem Federelement (20), das den Kolben (21) mit dem Ventilelement (12) gegen den Ventilsitz (11) drängt, wobei das Ventilelement (12) in einer Spritzkammer (14) verlagerbar ist, die dem Ventilelement (12) gegenüberliegend mehrere Spritzöffnungen (16,18) aufweist, **dadurch gekennzeichnet, dass** wenigstens zwei erste der Spritzöffnungen (16) Mittelachsen (17) aufweisen, die sich außerhalb des Einspritzventils kreuzen, und dass eine zentral liegende zweite Spritzöffnung (18) einen im Vergleich zu den übrigen Spritzöffnungen (16) größeren Durchmesser aufweist.

2. Einspritzventil nach Anspruch 1, **dadurch gekennzeichnet, dass** die Spritzkammer (14) einen Innendurchmesser aufweist, der größer ist als der Außendurchmesser des Ventilelements (12).

3. Einspritzventil nach einem der vorhergehenden Ansprüche, **dadurch gekennzeichnet, dass** eine erste Spritzöffnung (16) zumindest im Wesentlichen radial außerhalb des Ventilelements (12) liegen.

4. Einspritzventil nach einem der vorhergehenden Ansprüche, **dadurch gekennzeichnet, dass** die Spritzöffnungen (16,18) in einer Spritzlochplatte (13) ausgebildet sind.

5. Einspritzventil nach einem der vorhergehenden Ansprüche, **dadurch gekennzeichnet, dass** das Ventilelement (12) kegelstumpfförmig ausgebildet ist und eine flache, der Spritzlochplatte (13) gegenüberliegende Rückseite (15) aufweist.

6. Einspritzventil nach Anspruch 5 **dadurch gekennzeichnet, dass** das Ventilelement (12) an seiner Rückseite (15) einen Axialvorsprung (19) aufweist.

7. Einspritzventil nach Anspruch 6 **dadurch gekennzeichnet, dass** der Axialvorsprung (19) mittig angeordnet und breiter als die zweite Spritzöffnung (18) ausgebildet ist, um die zweite Spritzöffnung (18) bei maximaler Verlagerung des Ventilelements (12) zu verschließen.

8. Einspritzventil nach einem der vorhergehenden Ansprüche, **dadurch gekennzeichnet, dass** die zweite Spritzöffnung (18) einen Durchmesser von mindestens 0,5 mm aufweist.

9. Einspritzventil nach einem der vorhergehenden Ansprüche, **dadurch gekennzeichnet, dass** es als Pumpe-Düse-Einheit (6, 7) ausgebildet ist.

10. Abgasnachbehandlungssystem (1) für einen Verbrennungsmotor, insbesondere eines Kraftfahrzeugs, mit einem Tank (2) zur Bereitstellung eines flüssigen Abgasnachbehandlungsmittels, mit einem Einspritzventil (4), zum dosierten Einspritzen des Abgasnachbehandlungsmittels in das Abgas eines Verbrennungsmotors, **gekennzeichnet durch** die Ausbildung des Einspritzventils (4) nach einem der Ansprüche 1 bis 9.

11. Abgasnachbehandlungssystem nach Anspruch 10, **dadurch gekennzeichnet, dass** eine Fördereinrichtung (3) zum Fördern des flüssigen Abgasnachbehandlungsmittels von dem Tank (2) zu dem Einspritzventil vogesehen ist.

## Claims

1. Injection valve (4), in particular of an exhaust gas aftertreatment system (1) having an axially movable valve element (12), having a valve opening (10) which is assigned a valve seat (11) for the valve element (12), having a piston (21) which is connected fixedly to the valve element (12) and is guided through the valve opening (10), and having a spring element (20) which pushes the piston (21) with the valve element (12) against the valve seat (11), it being possible for the valve element (12) to be moved in an injection chamber (14) which has a plurality of injection openings (16, 18) in a manner which lies opposite the valve element (12), **characterized in that** at least two first ones of the injection openings (16) have center axes (17) which cross outside the injection valve, and **in that** a second injection opening (18) which lies centrally has a diameter which is greater in comparison with the remaining injection openings (16).

2. Injection valve according to Claim 1, **characterized in that** the injection chamber (14) has an internal diameter which is greater than the external diameter of the valve element (12).

3. Injection valve according to either of the preceding claims, **characterized in that** a first injection opening (16) lies at least substantially radially outside the valve element (12).

4. Injection valve according to one of the preceding claims, **characterized in that** the injection openings (16, 18) are configured in an injection hole plate (13).

5. Injection valve according to one of the preceding claims, **characterized in that** the valve element (12) is of frustoconical configuration and has a flat rear side (15) which lies opposite the injection hole plate (13).

6. Injection valve according to Claim 5, **characterized in that** the valve element (12) has an axial projection (19) on its rear side (15).

7. Injection valve according to Claim 6, **characterized in that** the axial projection (19) is arranged centrally and is of wider configuration than the second injection opening (18), in order to close the second injection opening (18) in the case of a maximum movement of the valve element (12).

8. Injection valve according to one of the preceding claims, **characterized in that** the second injection opening (18) has a diameter of at least 0.5 mm.

9. Injection valve according to one of the preceding claims, **characterized in that** it is configured as a pump-nozzle unit (6, 7).

10. Exhaust gas aftertreatment system (1) for an internal combustion engine, in particular of a motor vehicle, having a tank (2) for providing a liquid exhaust gas aftertreatment agent, having an injection valve (4), for the metered injection of the exhaust gas aftertreatment agent into the exhaust gas of an internal combustion engine, **characterized by** the configuration of the injection valve (4) according to one of Claims 1 to 9.

11. Exhaust gas aftertreatment system according to Claim 10, **characterized in that** a conveying device (3) is provided for conveying the liquid exhaust gas aftertreatment agent from the tank (2) to the injection valve.

## Revendications

1. Soupape d'injection (4), en particulier d'un système de post-traitement des gaz d'échappement (1), comprenant un élément de soupape (12) déplaçable axialement, une ouverture de soupape (10) à laquelle est associé un siège de soupape (11) pour l'élément de soupape (12), un piston (21) relié solidement à l'élément de soupape (12), lequel piston est guidé à travers l'ouverture de soupape (10), et un élément ressort (20) qui pousse le piston (21) avec l'élément de soupape (12) contre le siège de soupape (11), l'élément de soupape (12) étant déplaçable dans une chambre d'injection (14) qui comprend plusieurs ouvertures d'injection (16, 18) en regard de l'élément de soupape (12), **caractérisée en ce qu'**au moins deux premières ouvertures d'injection (16) présentent des axes médians (17) qui se croisent à l'extérieur de la soupape d'injection, et **en ce qu'**une deuxième ouverture d'injection (18) située centralement présente un diamètre plus grand par comparaison avec les ouvertures d'injection (16) restantes.

2. Soupape d'injection selon la revendication 1, **caractérisée en ce que** la chambre d'injection (14) présente un diamètre intérieur qui est supérieur au diamètre extérieur de l'élément de soupape (12).

3. Soupape d'injection selon l'une des revendications précédentes, **caractérisée en ce qu'**une première ouverture d'injection (16) se situe au moins sensiblement radialement à l'extérieur de l'élément de soupape (12).

4. Soupape d'injection selon l'une des revendications précédentes, **caractérisée en ce que** les ouvertures d'injection (16, 18) sont réalisées dans une plaque à ouvertures d'injection (13).

5. Soupape d'injection selon l'une des revendications précédentes, **caractérisée en ce que** l'élément de soupape (12) est de forme de tronconique et comprend un côté arrière (15) plat en regard de la plaque à ouvertures d'injection (13).

6. Soupape d'injection selon la revendication 5, **caractérisée en ce que** l'élément de soupape (12) comprend une saillie axiale (19) sur son côté arrière (15).

7. Soupape d'injection selon la revendication 6, **caractérisée en ce que** la saillie axiale (19) est disposée centralement et est réalisée de manière plus large que la deuxième ouverture d'injection (18), afin de fermer la deuxième ouverture d'injection (18) en cas de déplacement maximal de l'élément de soupape (12).

8. Soupape d'injection selon l'une des revendications précédentes, **caractérisée en ce que** la deuxième ouverture d'injection (18) présente un diamètre d'au moins 0,5 mm.

9. Soupape d'injection selon l'une des revendications précédentes, **caractérisée en ce qu'**elle est réalisée sous forme d'unité injecteur-pompe (6, 7).

10. Système de post-traitement des gaz d'échappement (1) pour un moteur à combustion interne, en particulier d'un véhicule automobile, comprenant un réservoir (2) pour fournir un agent liquide de post-traitement des gaz d'échappement, une soupape d'injection (4) pour l'injection dosée de l'agent de post-traitement des gaz d'échappement dans les gaz d'échappement d'un moteur à combustion interne, **caractérisé par** la réalisation de la soupape d'injection (4) selon l'une des revendications 1 à 9.

11. Système de post-traitement des gaz d'échappement selon la revendication 10, **caractérisé en ce qu'**un dispositif de refoulement (3) pour refouler l'agent liquide de post-traitement des gaz d'échappement du réservoir (2) à la soupape d'injection est prévu.
